# FASCICULE DE BREVET EUROPEEN

(11) **EP 2 526 412 B1**
(45) Date de publication et mention de la délivrance du brevet: **02.05.2018**
(21) Numéro de dépôt: 11700350.9
(22) Date de dépôt: 18.01.2011
(51) Int. Cl.: G01N 23/201

(54) **SYSTÈME COMPACT D'ANALYSE PAR RAYONS-X**
KOMPAKTES RÖNTGENUNTERSUCHUNGSSYSTEM
COMPACT X-RAY ANALYSIS SYSTEM

(30) Priorité: 18.01.2010 FR 1050301
(43) Date de publication de la demande: 28.11.2012
(73) Titulaire: Xenocs, 38360 Sassenage (FR)
(72) Inventeur: PANINE, Pierre, F-38660 La Terrasse (FR); HOGHOJ, Peter, F-38950 Saint Martin Le Vinoux (FR)
(74) Mandataire: Regimbeau
(86) Numéro de dépôt international: PCT/EP2011/050568
(87) Numéro de publication internationale: WO 2011/086191

(56) Documents cités:
- US-B2- 6 807 251
- YOULI LI ET AL: "Scatterless hybrid metal-single-crystal slit for small- angle X-ray scattering and high-resolution X-ray diffraction", JOURNAL OF APPLIED CRYSTALLOGRAPHY MUNKSGAARD INTERNATIONAL PUBLISHERS DENMARK, vol. 41, no. 6, décembre 2008 (2008-12), pages 1134-1139, XP002594567, ISSN: 0021-8898
- DIAT O ET AL: "Ultra-small-angle X-ray scattering with a Bonse-Hart camera on the high brilliance beamline at the ESRF", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL LNKD- DOI:10.1016/0168-9002(94)01253-9, vol. A356, no. 2, 15 mars 1995 (1995-03-15), pages 566-572, XP004009207, ISSN: 0168-9002
- TANG C C ET AL: "X-ray beam characteristics on MPW6.2 at the SRS", NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL LNKD- DOI:10.1016/J.NIMB.2004.03.010, vol. 222, no. 3-4, 1 août 2004 (2004-08-01), pages 659-666, XP004521888, ISSN: 0168-583X

## Description

### DOMAINE DE L'INVENTION

La présente invention concerne le domaine de l'analyse d'échantillons par rayons-X (RX), en particulier l'analyse d'échantillons par étude de la diffusion de rayons-X (diffusion RX) aux petits angles.

### ETAT DE LA TECHNIQUE

Les analyses par rayons-X, en particulier les analyses par étude de la diffusion de rayons-X aux petits angles (appelées analyses SAXS, correspondant à l'acronyme anglais « Small Angle X-ray Scattering »), nécessitent d'illuminer l'échantillon à analyser avec un faisceau de rayons-X ayant une qualité accrue, notamment en termes de distribution spatiale et angulaire d'intensité du faisceau. En effet, un système d'analyse SAXS requiert un faisceau intense parfaitement défini sur l'échantillon et sur le détecteur avec une divergence faible, ainsi qu'une taille de faisceau bien définie dans l'espace, de manière à obtenir un profil d'intensité uniforme dans le plan de l'échantillon et du détecteur.

La limite de détection d'un système SAXS est définie par la valeur minimum du vecteur d'onde qₘᵢₙ associée à l'échantillon qui peut être obtenue à l'aide du système d'analyse considéré, le vecteur d'onde étant inversement proportionnel au paramètre structural de l'échantillon dans l'espace réel. Dans l'approximation aux petits angles de la loi de Bragg, applicable aux applications SAXS, le vecteur d'onde est proportionnel à l'angle de diffusion. La limite de détection qₘᵢₙ est donc associée à l'angle minimum de diffusion pouvant être détecté, la détection de cet angle étant contrainte par la taille de faisceau sur l'échantillon, ce faisceau étant ensuite transmis sur le détecteur. Du fait qu'il est par ailleurs nécessaire d'obturer le faisceau transmis par l'échantillon avant qu'il n'atteigne le détecteur afin que ce faisceau transmis ne perturbe pas la mesure du faisceau diffusé, il est nécessaire d'augmenter la distance échantillon-détecteur pour pouvoir effectivement détecter les faisceaux diffusés aux petits angles.

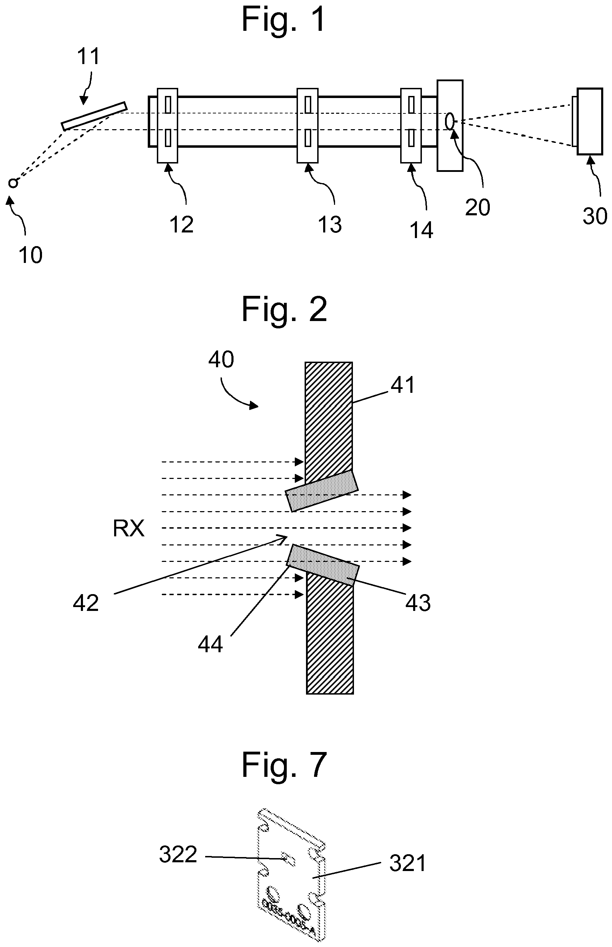

La figure 1 illustre un système d'analyse SAXS selon l'état de l'art constitué d'un miroir monochromateur 11 couplé à une source de rayons-X 10 et d'un ensemble de collimation du faisceau composé de trois organes de collimation (12;13;14), cet ensemble de collimation ayant pour objectif de délimiter spatialement la taille du faisceau de rayons-X à destination de l'échantillon 20 tout en empêchant que de la diffusion parasite interfère avec le signal de diffusion aux petits angles produit par l'échantillon et observé sur le détecteur 30. Dans ce système, les organes de collimation sont composés d'une plaque formée dans un matériau métallique absorbant et comprenant un orifice sous la forme d'un trou (« pinhole » en anglais) ou d'une fente. Le premier organe de collimation 12 est prévu pour une première délimitation spatiale du faisceau de rayons-X, le deuxième organe de collimation 13 permet quant à lui de couper le faisceau parasite issu du premier organe de collimation 12, c'est-à-dire le faisceau diffusé sur les bords de l'organe de collimation 12, et le dernier organe de collimation 14 permet de définir la taille de faisceau sur l'échantillon ce qui a un impact direct sur l'intensité de signal qui sera diffusé par l'échantillon (définition de la quantité d'échantillon illuminé) mais également sur la limite de détection du système.

Un des inconvénients de ce type de système vient du fait que, pour réduire le signal parasite diffusé au niveau des organes de collimation (fentes et pinholes), le flux est fortement réduit (réduction de l'ouverture de la deuxième fente notamment), ce qui conduit à des temps d'analyse plus longs et des intensités de signal diffusé par l'échantillon qui sont plus faibles (perte de l'ordre d'un facteur 3). Par ailleurs, de tels systèmes sont particulièrement encombrants puisque la longueur de l'ensemble de définition est généralement largement supérieure au mètre.

Il a récemment été proposé un nouveau type de fentes hybrides qui permettent de résoudre en partie les inconvénients cités plus haut lorsqu'elles sont utilisées dans des systèmes d'analyse par rayons-X. Un tel type de fente 40 est illustré à la figure 2 (vue en coupe) et décrit en détail dans la publication intitulée « Scatterless hybrid metal-single-crystal slit for small-angle X-ray scattering and high-resolution X-ray diffraction » de Youli Li et al. (J. Appl. Cryst. (2008). 41, 1134-1139). Le principe de ces fentes hybrides anti-diffusantes consiste à utiliser une plaque 41 d'un matériau absorbant les rayons-X (eg. matériau à base de métal de type tungstène ou laiton) dans laquelle est ménagée une fente 42, et à recouvrir les lèvres de la fente 42 d'un matériau monocristallin 43 de manière à limiter toute diffusion sur les arêtes ou le bord de la fente 42. Le plan cristallin est orienté par rapport au faisceau incident de manière à limiter toute diffraction de Bragg pouvant entraîner une diffusion parasite. De plus, afin de limiter toute diffraction à incidence rasante, le bord des fentes 42 est incliné par rapport au faisceau RX suivant un angle de quelques degrés à quelques dizaines de degrés. Par ailleurs, comme cela est illustré sur la figure 2, le cristal 43 est positionné sur les lèvres de la fente 42 de manière à faire saillie par rapport à la plaque, créant ainsi une protubérance 44 suivant la largeur de la fente 42, afin d'éviter que toute arête de la fente 42 soit touchée par le faisceau RX incident ce qui pourrait provoquer de la diffusion parasite.

Il résulte de cette géométrie consistant à incliner le cristal par rapport au faisceau incident que le profil d'absorption de ces fentes est progressif et dépend de l'inclinaison de la partie monocristalline ainsi que du numéro atomique de l'élément composant le cristal. En effet, une certaine partie de faisceau traversant uniquement le matériau cristallin est plus ou moins absorbée suivant la zone à travers laquelle il traverse le cristal en raison d'une variation d'épaisseur du matériau cristallin effectivement traversé (le faisceau est très faiblement absorbé lorsqu'il traverse à proximité de la protubérance et un peu plus lorsqu'il traverse à proximité de l'arête métallique du matériau absorbant).

Il a en conséquence été proposé d'utiliser de telles fentes hybrides pour améliorer les systèmes existants d'analyse par rayons-X de diffusion aux petits angles, notamment pour former l'ensemble de collimation destiné à être placé entre le dispositif de délivrance du faisceau de rayons-X et l'échantillon. Youli Li et al. propose en particulier de remplacer la configuration à trois fentes exposées ci-dessus par une configuration comprenant deux fentes hybrides anti-diffusantes successives qui ont pour fonction de délimiter la taille du faisceau tout en empêchant une diffusion parasite.

L'utilisation de telles fentes hybrides permet de simplifier la configuration de l'ensemble de collimation du système d'analyse, et permet en outre d'augmenter sensiblement le flux de rayons-X sur l'échantillon. Un inconvénient majeur reste toutefois à déplorer en ce qui concerne l'encombrement du système puisque les distances nécessaires entre les différents éléments du système sont inchangées, avec une distance entre la sortie du dispositif de délivrance de rayons-X et l'échantillon (distance imposée par l'espacement nécessaire pour l'ensemble de collimation) toujours supérieure au mètre (de l'ordre de 1,50 m).

Il est aussi connu par le document US-B2-6807251 un dispositif de diffraction à configurations interchangeables.

Un but de la présente invention est donc de proposer un dispositif de délivrance de rayons-X pour l'analyse d'un échantillon par rayons-X, qui permet de résoudre au moins l'un des inconvénients précités.

En particulier, un but de la présente invention est de proposer un dispositif de délivrance de rayons-X qui est compact et adapté pour être utilisé dans un système compact d'analyse d'un échantillon par rayons-X, tout en fournissant un faisceau de rayons-X sur l'échantillon qui présente une qualité accrue, notamment en termes de distribution spatiale et angulaire d'intensité du faisceau.

Un autre but de la présente invention est de proposer un dispositif de délivrance de rayons-X et un système d'analyse d'un échantillon par rayons-X associé particulièrement adaptés pour l'étude d'échantillons par diffusion de rayons-X aux petits angles.

### EXPOSE DE L'INVENTION

A cette fin, on propose un dispositif de délivrance d'un faisceau de rayons-X pour l'analyse d'un échantillon, selon la revendication 1. Le fait d'utiliser un organe de coupure permettant de couper les faisceaux directs de rayons-X susceptibles d'atteindre l'organe anti-diffusant de délimitation spatiale sans conditionnement par le composant optique monochromateur, en combinaison avec les autres éléments du système, permet d'avoir un dispositif de délivrance particulièrement compact puisque l'organe anti-diffusant de délimitation spatiale peut être considérablement rapproché du composant optique monochromateur tout en ayant une qualité accrue pour le faisceau de rayons-X sur l'échantillon.

Des aspects préférés mais non limitatifs de ce dispositif, pris ensemble ou en combinaison, sont les suivants :
- l'organe de coupure comprend une plaque d'absorption formée dans un matériau absorbant les rayons-X et incluant un orifice de définition, ladite plaque d'absorption étant agencée en amont du composant optique monochromateur par rapport au sens de propagation des rayons-X, et ledit orifice de définition ayant des dimensions et un positionnement prévus pour couper les faisceaux directs de rayons-X émis par le bloc source susceptibles d'atteindre l'organe anti-diffusant de délimitation sans conditionnement par le composant optique monochromateur.
- lequel l'orifice de définition de l'organe de coupure a des dimensions réduites et un positionnement prévus pour couper une partie des faisceaux optiques de rayons-X émis par le bloc source venant directement impacter la surface réfléchissante du composant optique monochromateur.
- l'orifice de définition de l'organe de coupure comprend des bords inclinés et revêtus d'un matériau monocristallin prévu pour empêcher la diffusion de rayons-X sur lesdits bords.
- l'orifice de définition et l'orifice de délimitation ont la forme d'une fente ou d'un trou, le trou étant de préférence rectangulaire, carré ou circulaire.
- la plaque d'absorption, le composant optique monochromateur et l'organe anti-diffusant de délimitation spatiale sont fixés sur un même support monolithique.
- la plaque d'absorption, le composant optique monochromateur et l'organe anti-diffusant de délimitation spatiale sont agencés à l'intérieur d'un boitier adapté pour être mis sous vide, ledit boitier comprenant des parois d'entrée et de sortie formées dans un matériau transparent aux rayons-X.
- l'organe de coupure comprend une lame d'absorption formée dans un matériau absorbant les rayons-X, ladite lame d'absorption étant placée dans le bloc optique en regard du composant optique monochromateur de manière à couper les rayons-X susceptibles d'atteindre l'organe anti-diffusant de délimitation sans conditionnement par le composant optique monochromateur.
- la lame d'absorption comprend une tranche inclinée et revêtue d'un matériau monocristallin prévu pour empêcher la diffusion de rayons-X sur ladite tranche.
- le composant optique monochromateur est courbé suivant une direction sagittale et suivant une direction méridionale par rapport au sens de propagation des rayons-X, la lame d'absorption étant agencée au centre du composant optique monochromateur de manière à affleurer la surface réfléchissante.
- la lame d'absorption a une forme complémentaire du composant optique monochromateur.
- lequel l'organe anti-diffusant de délimitation spatiale comprend une plaque dans laquelle est formée l'orifice de délimitation, ledit orifice de délimitation comprenant des bords inclinés revêtus du matériau monocristallin prévu pour empêcher la diffusion de rayons-X sur lesdits bords.
- lequel l'organe anti-diffusant de délimitation spatiale comprend plusieurs plaques, chaque plaque ayant une tranche inclinée revêtue du matériau monocristallin prévu pour empêcher la diffusion de rayons-X sur ladite tranche, lesdites plaques étant agencées les unes par rapport aux autres de sorte que lesdites tranches forment l'orifice de délimitation dans le sens de propagation des rayons-X.
- la distance entre la sortie du composant optique monochromateur et l'entrée de l'organe anti-diffusant de délimitation spatiale est inférieure à 15 cm.
- le dispositif de délivrance comprend en outre un organe de coupure complémentaire placé entre le composant optique monochromateur et l'organe anti-diffusant de délimitation spatiale, ledit organe de coupure complémentaire comprenant une plaque d'absorption des rayons-X dans laquelle est formée un orifice de définition complémentaire, l'orifice de définition complémentaire ayant des dimensions et un positionnement prévus pour couper une partie des rayons-X conditionnés par le composant optique monochromateur.
- la surface réfléchissante du composant optique monochromateur est formée d'un revêtement multicouche, ledit composant optique monochromateur étant en outre conformé pour une collimation des rayons-X impactant ledit composant optique monochromateur en direction de l'échantillon.

En outre, on propose un système d'analyse d'un échantillon par rayons-X qui comprend un tel dispositif de délivrance de rayons-X destiné à être placé en amont de l'échantillon à analyser, le système comprenant en outre un détecteur de rayons-X placé en aval de l'échantillon, et destiné notamment à recueillir les rayons-X émis par l'échantillon.

Dans ce cas, la surface réfléchissante du composant optique monochromateur peut être formée d'un revêtement multicouche, ledit composant optique monochromateur étant en outre conformé pour une focalisation sur le détecteur des rayons-X impactant ledit composant optique monochromateur.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels, outre les figures 1 et 2 illustrant l'art antérieur :
- la figure 3 est un schéma illustrant la propagation de rayons-X émis par un bloc source en direction d'un bloc optique comprenant un composant optique monochromateur ;
- la figure 4 est un schéma illustrant un système de délivrance de rayons-X intégré dans un système d'analyse d'un échantillon, selon un premier mode de réalisation de l'invention ;
- la figure 5 est un schéma illustrant un système de délivrance de rayons-X intégré dans un système d'analyse d'un échantillon, selon un deuxième mode de réalisation de l'invention ;
- la figure 6 est un schéma illustrant un système de délivrance de rayons-X intégré dans un système d'analyse d'un échantillon, selon un troisième mode de réalisation de l'invention ;
- la figure 7 illustre un mode de réalisation particulier d'un organe de coupure pouvant être utilisé dans le système d'analyse de la figure 4 ou de la figure 6.

### DESCRIPTION DETAILLEE DE L'INVENTION

Un dispositif de délivrance de rayons-X comprend généralement un bloc source 100 adapté pour émettre des rayons-X, ce bloc source 100 étant couplé à un bloc optique 200 permettant de conditionner ces rayons-X émis par le bloc source 100 en direction de l'échantillon 50 à analyser.

Le bloc source 100 comprend donc une source S de rayons-X adaptée pour générer un faisceau de rayons-X, par exemple constitué de raies d'émissions monochromatiques telles que les raies de fluorescence d'un matériau cible constituant une partie de la source. La source S peut ainsi être typiquement une source à interaction électrons-matière de type tube scellé ou de type anode tournante pour lesquels l'interaction à l'origine de l'émission de rayons-X est une interaction électrons-matière, ou une source laser pour laquelle la génération de rayons-X se produit par une interaction laser-matière.

Situé en aval du bloc source 100 par rapport au sens de propagation P_{RX} des rayons-X, le bloc optique 200 comprend de préférence un composant optique monochromateur 210 permettant de filtrer les raies parasites et le rayonnement de freinage (rayonnement communément appelé le « Bremsstrahlung ») émis par la source S dans le but d'obtenir un faisceau dont la résolution spectrale est adaptée pour faire des analyses SAXS notamment. De préférence, le composant optique monochromateur 210 comprend un support 211 ayant une conformation spécifique, ce support 211 étant recouvert d'une surface réfléchissante 212 prévue pour conditionner les rayons-X émis par le bloc source 100 selon un effet optique monodimensionnel ou bidimensionnel (c'est-à-dire un conditionnement selon une ou deux directions de l'espace). Encore de manière préférée, le composant optique monochromateur 210 est conformé pour assurer une focalisation ou une collimation du faisceau divergent émis par la source S afin de mettre en forme le faisceau de rayons-X en direction de l'échantillon 50 et du détecteur 60 de rayons-X placé en aval du dispositif de délivrance de rayons-X.

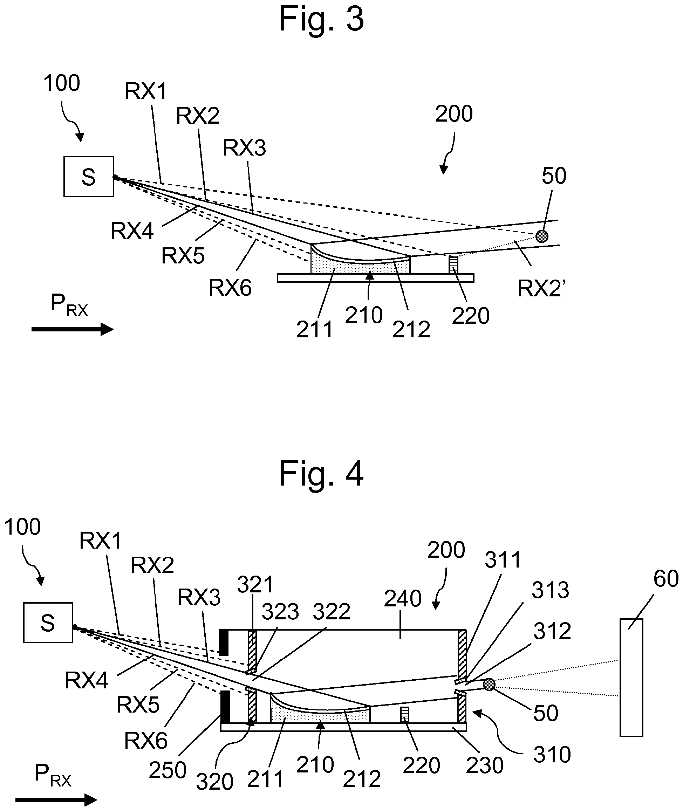

La figure 3 illustre la propagation des rayons-X émis par le bloc source 100 en direction du bloc optique 200 puis d'un échantillon 50 qui serait positionné à proximité du bloc optique, c'est-à-dire typiquement à moins de 15 centimètres par rapport à la sortie du composant optique monochromateur. Parmi les différents faisceaux directs de rayons-X (RX1, RX2, RX3, RX4, RX5, RX6) émis par la source S, on peut les classer en plusieurs catégories selon leur cheminement dans le bloc optique 200. On entend par faisceau direct de rayons-X tout faisceau de rayons-X émis par la source S sans subir de diffraction.

Il y a tout d'abord les faisceaux (RX3, RX4) que l'on appelle les «faisceaux optiques », qui correspondent aux faisceaux directs venant impacter directement (c'est-à-dire sans diffraction ou diffusion préalable) le composant optique monochromateur 210. Ces faisceaux optiques sont conformés par le composant optique monochromateur 210 en direction de l'échantillon 50, et vont pouvoir être utilisés (au moins en partie) pour l'analyse dudit échantillon 50. Parmi ces faisceaux optiques, les faisceaux nécessaires à l'analyse de l'échantillon sont qualifiés de « faisceaux utiles ». Ces faisceaux utiles peuvent correspondre à l'ensemble des faisceaux optiques conditionnés par le composant optique monochromateur, ou peuvent constituer une partie uniquement de ces faisceaux optiques. Dans ce dernier cas, on peut utiliser des moyens permettant de couper une partie des faisceaux optiques non-utiles. En particulier, les faisceaux utiles peuvent être définis par un organe comprenant un orifice de délimitation placé en entrée et/ou en sortie de composant optique monochromateur. Cette délimitation du faisceau optique en un faisceau utile peut être faite selon la direction sagittale (direction perpendiculaire au plan des figures 3 à 6), et/ou suivant la longueur du composant optique monochromateur, c'est-à-dire suivant la direction méridionale correspondant à la direction générale de propagation des rayons-X.

Tous les autres faisceaux directs de rayons-X (RX1, RX2, RX5, RX6) émis par la source S ne sont pas réfléchis par le composant optique monochromateur, et ne peuvent donc pas être « utiles » pour l'analyse.

Parmi les faisceaux de rayons-X (RX1, RX2, RX5, RX6) qui ne vont pas impacter le composant optique monochromateur 210, on peut catégoriser les faisceaux directs de rayons-X (RX1, RX2) émis par le bloc source susceptibles d'atteindre l'échantillon 50 sans conditionnement par le composant optique monochromateur 210. Certains faisceaux de rayons-X RX1 peuvent en effet atteindre directement cet échantillon 50 sans subir de diffraction dans le bloc optique 200, tandis que d'autres faisceaux de rayons-X RX2 peuvent atteindre l'échantillon 50 de manière indirecte, c'est-à-dire en subissant une diffraction dans le bloc optique 200. Ce sera par exemple le cas de faisceaux diffusés RX2' issus de l'impaction du faisceau direct de rayons-X RX2 sur un organe opto-mécanique 220 agencé dans le bloc optique 200.

D'autres faisceaux directs de rayons-X (RX5, RX6) sont émis suivant une direction de sorte qu'ils seront en tout état de cause stoppés par le composant optique monochromateur 210, et plus précisément par le support 211. De préférence, le support 211 du composant optique monochromateur 210 est formé dans un matériau absorbant les rayons-X et évitant toute diffusion.

Tous les faisceaux de rayons-X venant frapper l'échantillon 50 sans avoir été conditionnés par le composant optique monochromateur 210 viennent perturber l'analyse par rayons-X faite de l'échantillon 50, ces faisceaux étant appelées faisceaux parasites.

En conséquence, il est préférable que le système d'analyse par rayons-X soit prévu pour limiter l'influence de tels faisceaux, tout en offrant un faisceau de rayons-X délivré sur l'échantillon avec une qualité et une intensité importante. A cette fin, il est en particulier proposé de couper les faisceaux directs de type RX1 et RX2, c'est-à-dire les faisceaux directs situés dans la ligne de vue source-composant optique (la ligne de vue étant définie par l'axe [source - entrée de composant optique] (correspondant à RX4) et l'axe [source - sortie de composant optique] (correspondant à RX3) avec une déviation de quelques degrés autours de ces axes).

Pour ce faire, il est proposé d'utiliser un dispositif de délivrance de rayons-X qui, outre le bloc source 100 et le bloc optique 200 présenté plus haut, comprend des moyens de définition 300 des rayons-X, ces moyens de définition 300 comprenant en combinaison :
- un organe 310 anti-diffusant de délimitation spatiale des rayons-X conditionnés par le composant optique monochromateur 210, ledit organe de délimitation 310 étant agencé en aval du composant optique monochromateur 210 par rapport au sens de propagation P_{RX} des rayons-X ; et
- un organe 320 de coupure des rayons-X émis par le bloc source 100, ledit organe de coupure 320 comprenant des moyens d'absorption de rayons-X 321 agencés dans le dispositif de délivrance pour couper les faisceaux directs de rayons-X émis par le bloc source 100 susceptibles d'atteindre l'organe anti-diffusant de délimitation spatiale 310 sans conditionnement par le composant optique monochromateur 210.

L'organe de coupure 320 permet donc d'empêcher que des faisceaux de rayons-X n'ayant pas été réfléchis par le composant optique monochromateur 210 puissent atteindre l'échantillon 50 placé en aval de l'organe anti-diffusant de délimitation spatiale 310.

Une solution utilisée classiquement pour réduire l'influence des faisceaux parasites est de placer l'élément de délimitation suffisamment loin du composant optique monochromateur 210, de sorte que ces faisceaux parasites ne peuvent atteindre et traverser la fenêtre de délimitation.

Dans la présente invention, l'utilisation de l'organe de coupure 320 est donc particulièrement avantageuse puisque cela permet de rapprocher l'élément permettant de réaliser la délimitation spatiale du faisceau de rayons-X, formant ainsi un système très compact.

Mieux encore, l'organe anti-diffusant de délimitation spatiale 310 peut même être agencé pour être intégré dans le dispositif de délivrance de rayons-X (par exemple dans ou en sortie du bloc optique 200), ce qui simplifie grandement le système d'analyse RX pour lequel il n'est donc pas nécessaire de prévoir un ensemble de délimitation spécifique, en complément du dispositif de délivrance de rayons-X.

Ces organes anti-diffusant de délimitation spatiale 310 et de coupure 320 des rayons-X sont présentés en détail ci-dessous.

L'organe 310 anti-diffusant de délimitation spatiale est destiné à obtenir un profil de faisceau uniforme et épuré, directement en sortie de dispositif de délivrance de faisceau rayons-X.

La propriété principale des rayons X provient de leur longueur d'onde, leur interaction avec la matière s'opérant à l'échelle de cette longueur, c'est-à-dire de l'ordre de l'Angström (Å). Ainsi, toute présence physique positionnée dans un faisceau de rayons-X dont la taille dépasse quelques Angstrôms a un effet non négligeable sur la qualité du faisceau RX, générant un signal de diffusion, de diffraction, etc. En ce sens, tout objet utilisé pour délimiter spatialement la distribution d'intensité affecte de manière non négligeable la qualité du faisceau de rayons-X illuminant l'échantillon, cette contribution étant appelée contribution parasite ou signal parasite.

Il est donc ici proposé d'utiliser un organe de délimitation spatiale spécialement adapté pour réduire, voire supprimer, le signal parasite (issu par exemple de la diffusion aux bords de la fenêtre de délimitation de l'organe). Pour ce faire, l'organe anti-diffusant de délimitation spatiale 310 comprend une ou plusieurs plaques 311 ayant des portions 313 agencées pour former un orifice de délimitation 312, lesdites portions 313 étant revêtues d'un matériau monocristallin limitant la diffusion de rayons-X.

Cela permet de prévoir un unique organe de délimitation spatiale dans le système d'analyse, et donc de simplifier ce système et réduire son encombrement. En outre, couplé à l'organe de coupure 320, cet organe anti-diffusant de délimitation spatiale 310 peut être placé proche (par exemple à une distance inférieure à 15 cm) de la sortie du composant optique monochromateur (la sortie correspondant à l'extrémité du composant optique monochromateur située en aval par rapport au sens de propagation des rayons-X), ce qui augmente encore la compacité du système.

L'organe anti-diffusant de délimitation spatiale 310 est de préférence formé selon une structure telle que proposée par Youli Li et al. dans sa publication intitulée « Scatterless hybrid metal-single-crystal slit for small-angle X-ray scattering and high-resolution X-ray diffraction » (J. Appl. Cryst. (2008). 41, 1134-1139).

En particulier, les plaques 311 sont formées dans un matériau absorbant les rayons-X, par exemple un matériau à base métallique tel que le tungstène, le plomb, ou le laiton. Ces plaques peuvent avoir une épaisseur de quelques millimètres, de l'ordre de 2 mm par exemple. Le matériau monocristallin utilisé pour limiter la diffusion de rayons-X est quant à lui de préférence du Silicium, notamment dans le cas d'une source RX émettant la radiation Cuivre Kα, ou du Germanium, notamment dans le cas d'une source RX émettant la radiation Molybdène Kα.

La configuration de l'organe anti-diffusant de délimitation spatiale 310 peut également être plus ou moins complexe.

La configuration la plus simple consiste par exemple en une unique plaque 311 dans laquelle est formée l'orifice de délimitation 312, ledit orifice de délimitation 312 comprenant des bords 313 inclinés revêtus du matériau monocristallin prévu pour empêcher la diffusion de rayons-X sur lesdits bords 313. L'orifice de délimitation 312 peut par exemple être une fente (pour une analyse monodimensionnelle), ou un trou (pour une analyse bidimensionnelle) ayant une forme circulaire, carré ou rectangulaire.

Selon une configuration plus complexe (non représentée), l'organe anti-diffusant de délimitation spatiale 310 comprend plusieurs plaques 311, chaque plaque ayant une tranche 313 inclinée revêtue du matériau monocristallin prévu pour empêcher la diffusion de rayons-X sur ladite tranche, lesdites plaques 311 étant agencées les unes par rapport aux autres de sorte que lesdites tranches forment l'orifice de délimitation dans le sens de propagation des rayons-X.

L'organe anti-diffusant de délimitation spatiale 310 peut par exemple comprendre deux plaques 311 dont les tranches 313 sont agencées en regard de sorte que l'espacement entre les plaques 311 forme une fente de délimitation spatiale 312. Dans ce cas, l'analyse RX correspondante est une analyse de type monodimensionnel c'est-à-dire que le profil du faisceau diffusé est analysé suivant une dimension dans le cas d'un système SAXS. L'organe anti-diffusant est alors couplé à un composant optique monochromateur produisant un effet optique monodimensionnel tel qu'une focalisation ou une collimation dans un plan de l'espace.

Lorsque l'on souhaite que l'orifice de délimitation 312 ait la forme d'un trou plutôt que d'une fente selon cette configuration complexe, l'organe anti-diffusant de délimitation spatiale 310 comprend alors deux ensembles de deux plaques 311, les deux plaques 311 de chaque ensemble étant agencées en regard l'une par rapport à l'autre pour former une fente de délimitation. Ces deux ensembles de plaques sont positionnés l'un après l'autre dans le sens de propagation des rayons-X, les plaques étant parallèles les unes aux autres. Ces ensembles sont en outre agencés de sorte que la fente de délimitation du deuxième ensemble de plaques soit transversale à la fente de délimitation du premier ensemble de plaques, formant ainsi un orifice de délimitation se présentant sous la forme d'un trou rectangulaire en se plaçant dans le sens de propagation des rayons-X. Dans ce cas, l'analyse RX correspondante est une analyse de type bidimensionnel. L'organe anti-diffusant est alors couplé à un composant optique monochromateur produisant un effet optique bidimensionnel tel qu'une collimation dans deux plans de l'espace ou une focalisation sur un point unique. On pourra aussi prévoir un arrangement comprenant plus que quatre lames formant un orifice pseudo-circulaire, à la manière d'une iris photographique.

Un avantage lié à la configuration complexe de l'organe anti-diffusant de délimitation spatiale 310 est de pouvoir faire varier la taille de l'orifice de délimitation 312 de manière simple, en changeant le positionnement relatif des plaques 311. Par ailleurs, ces plaques 311 peuvent être montées sur un mécanisme motorisé de coulissement, de manière à faciliter leur manipulation.

L'organe anti-diffusant de délimitation spatiale 310 des rayons-X constitue en général la sortie du dispositif de délivrance proposé. L'échantillon 50 est positionné immédiatement à la sortie de ce dispositif de délivrance, c'est-à-dire immédiatement après l'organe anti-diffusant de délimitation spatiale 310, au niveau de l'orifice de délimitation 312. Le système d'analyse qui comprend un tel dispositif de délivrance de rayons-X ainsi qu'un détecteur placé en aval de l'échantillon est donc particulièrement compact par apport aux dispositifs existants.

Comme on l'a indiqué plus haut, l'organe de coupure 320 comprend des moyens d'absorption de rayons-X 321 agencés dans le dispositif de délivrance pour couper les faisceaux directs de rayons-X émis par le bloc source 100 susceptibles d'atteindre l'organe anti-diffusant de délimitation spatiale 310 sans conditionnement par le composant optique monochromateur 210. Il permet ainsi d'empêcher que des faisceaux de rayons-X qui ne seraient ou ne sont pas réfléchis par le composant optique monochromateur 210 puissent atteindre l'échantillon 50 placé en aval de l'organe anti-diffusant de délimitation spatiale 310. Les moyens d'absorption sont de préférence formés dans un matériau adapté pour absorber des rayons-X d'énergies allant au moins jusqu'à 60 keV.

De manière préférée, les moyens d'absorption 321 de rayons-X de l'organe de coupure 320 sont agencés dans le bloc optique 200 pour empêcher les faisceaux parasites de rayons-X d'aller au-delà du composant optique monochromateur 210 dans le sens de propagation des rayons-X. De ce fait, l'organe de coupure 320 permet de couper tout faisceau direct qui ne va pas réfléchir sur le composant optique monochromateur 210, et qui serait susceptible d'atteindre l'échantillon 50. Cela permet en outre d'éviter que de tels faisceaux directs puissent impacter un autre composant du bloc optique 200 et donc diffuser, en particulier en direction de l'échantillon 50.

Selon un premier mode de réalisation tel qu'illustré à la figure 4, l'organe de coupure 320 comprend une plaque d'absorption 321 formée dans matériau absorbant les rayons-X, tel que par exemple un matériau à base de métal (eg. tungstène, plomb, laiton). Dans cette plaque d'absorption 321 est en outre ménagé un orifice de définition 322 se présentant par exemple sous la forme d'une fente ou d'un trou (eg. circulaire ou rectangulaire).

Cette plaque d'absorption 321 est de préférence agencée en amont du composant optique monochromateur 210 par rapport au sens de propagation des rayons-X. Elle peut par exemple être plaquée à l'entrée du composant optique monochromateur 210.

L'orifice de définition 322 de cette plaque d'absorption 321 a des dimensions et un positionnement prévus pour couper les faisceaux directs de rayons-X émis par le bloc source 200 qui sont susceptibles d'atteindre l'organe anti-diffusant de délimitation spatiale 320 sans conditionnement par le composant optique monochromateur 210. Plus précisément, cette plaque d'absorption 321 a pour objet d'empêcher que les faisceaux directs susceptibles d'impacter l'organe de délimitation 310 entrent dans le bloc optique 200, ce qui permet de réduire considérablement la présence de faisceaux parasites au niveau de l'échantillon 50.

Dans le mode de réalisation illustré à la figure 4, la plaque d'absorption 321 et l'orifice de définition correspondant 322 sont agencés de manière à couper à la fois les faisceaux directs (RX2) susceptibles d'impacter l'organe de délimitation spatiale 320 sans conditionnement par le composant optique monochromateur 210, ainsi que les autres faisceaux directs (RX5) qui seraient en tout état de cause absorbés par le support 211 du composant optique monochromateur 210. La plaque d'absorption 321 et l'orifice de définition correspondant 322 pourraient toutefois être agencés de manière à ne couper que les faisceaux directs (RX2) susceptibles d'impacter l'organe de délimitation spatiale 320 sans conditionnement par le composant optique monochromateur 210. La plaque d'absorption 321 permet ainsi notamment de couper les faisceaux directs situés dans la ligne de vue du composant optique monochromateur 210 qui ne sont pas coupés par les éléments mécaniques du système de délivrance de faisceau de rayons-X disposés en amont du composant optique monochromateur 210, tels que par exemple la bride d'entrée 250 du bloc optique 200. En l'absence d'une telle bride d'entrée 250, par exemple lorsque la plaque d'absorption 321 constitue l'entrée du bloc optique 200, alors cette plaque d'absorption 321 permet également d'absorber les faisceaux directs RX1 et RX6.

On précise à titre d'indication que les moyens d'absorption utilisés pour couper les faisceaux directs situés dans la ligne de vue du composant optique monochromateur seront dimensionnés de manière à couper une très grande partie du faisceau direct étant entendu qu'un flux résiduel, mais de faible quantité, pourra subsister dans la ligne de vue du composant optique monochromateur du fait des précisions de fabrication de ces éléments. Ce flux résiduel sera typiquement inférieur à 1% du faisceau réfléchi par le composant optique monochromateur dans le cadre de l'invention.

Selon une configuration encore préférée, l'orifice de définition 322 de la plaque d'absorption 321 a des dimensions réduites et un positionnement prévus pour couper une partie des faisceaux optiques de rayons-X émis par le bloc source 100 et qui devraient venir directement impacter la surface réfléchissante 212 du composant optique monochromateur 210. Une telle configuration permet de garantir que vraiment tous les faisceaux directs parasites, susceptibles d'impacter l'organe de délimitation soient coupés avant d'entrer dans le bloc optique 200.

Selon une configuration encore préférée, l'organe de coupure assure également le rôle de définition du faisceau utile pour l'analyse RX de l'échantillon. Dans ce mode de mise en oeuvre l'organe de définition est constitué de moyens d'absorption 326 agencés dans le dispositif de délivrance de manière à limiter en sortie du composant optique monochromateur 210 le faisceau conditionné par celui-ci au seul faisceau utile pour l'analyse RX en coupant simultanément les faisceaux directs de rayons-X émis par le bloc source susceptibles d'atteindre l'organe anti-diffusant de délimitation spatiale sans conditionnement par le composant optique monochromateur, et une partie des faisceaux optiques non-utiles pour l'analyse RX.

En particulier, dans le cas où le composant optique monochromateur est un composant qui comprend une surface diffractive conformée de manière à produire un effet de focalisation ou de collimation, la surface utile est typiquement plus faible que la surface réelle notamment dans la direction sagittale qui est la direction perpendiculaire au plan de la figure 4.

Selon le mode de mise en oeuvre consistant à appliquer l'organe de coupure en amont et/ou en aval du composant optique monochromateur, les moyens de définition 320 permettent respectivement d'obturer la portion du faisceau de rayons-X impactant des zones non-utiles du composant optique monochromateur et/ou de bloquer les faisceaux de rayons-X conditionnées par les zones non utiles du composant optique monochromateur de manière à assurer la définition du faisceau utile pour l'analyse RX. La figure 7 illustre la forme qu'une telle plaque d'absorption 321 peut prendre.

Selon un mode de mise en oeuvre de l'invention, l'orifice de définition 322 de la plaque d'absorption 321 comprend des bords 323 inclinés et revêtus d'un matériau monocristallin prévu pour empêcher la diffusion de rayons-X sur lesdits bords 323. Dans ce cas, la structure de cette plaque d'absorption 321 peut être très similaire à celle de l'organe anti-diffusant de délimitation spatiale 310. Il pourrait même être envisagé que l'organe de coupure 320 comprenne un ou plusieurs ensembles de deux plaques agencées pour former l'orifice de définition 322 recherché de la même manière que pour l'organe anti-diffusant de délimitation spatiale 310.

Afin de mettre en oeuvre efficacement cette variante de l'organe de coupure 320 où les bords de la plaque d'absorption 321 sont revêtus d'un bord anti-diffusant, on privilégiera un positionnement des plaques d'absorption 321 en sortie du composant optique monochromateur.

De préférence encore, la ou les plaque(s) d'absorption 321, le composant optique monochromateur 210 et l'organe anti-diffusant de délimitation spatiale 310 sont fixés sur un même support monolithique 230. Un tel mode de mise en oeuvre permet un alignement précis des différents éléments les uns par rapport aux autres, ce qui permet d'optimiser la fonction de coupure de l'organe de coupure 320 ainsi que la fonction de délimitation spatiale 310 de l'organe anti-diffusant de délimitation spatiale 310. Selon un mode de mise en oeuvre particulier le support 211 du composant optique conformé peut constituer le support monolithique de l'organe de définition 320 et de l'organe anti-diffusant de délimitation spatiale 310. En particulier, l'organe de définition 320 peut être placé contre l'entrée du composant optique monochromateur 210.

Selon un mode de mise en oeuvre encore préféré, la plaque d'absorption 321, le composant optique monochromateur 210 et l'organe anti-diffusant de délimitation spatiale 310 font partie intégrante du bloc optique 200 et sont placés à l'intérieur d'un boitier 240 adapté pour être mis sous vide. Ce boitier 240 comprend de préférence des parois d'entrée et de sortie formées dans un matériau transparent aux rayons-X. Il est entendu que ce matériau transparent est un matériau ne diffusant pas les rayons-X. Selon une variante, les parois d'entrée et de sortie de ce boitier 240 sont formées par la plaque d'absorption 321 de l'organe de coupure 320 et par l'organe anti-diffusant de délimitation spatiale 310 respectivement, ces organes comprenant dans ce cas des moyens permettant la mise sous vide du bloc optique 200. On peut par exemple prévoir des membranes de mise sous vide transparentes aux rayons-X au niveau des orifices de définition 322 et de délimitation 312. Ces membranes seront formées dans un matériau dont la composition chimique et la structure seront judicieusement choisis pour ne pas générer de diffusion RX.

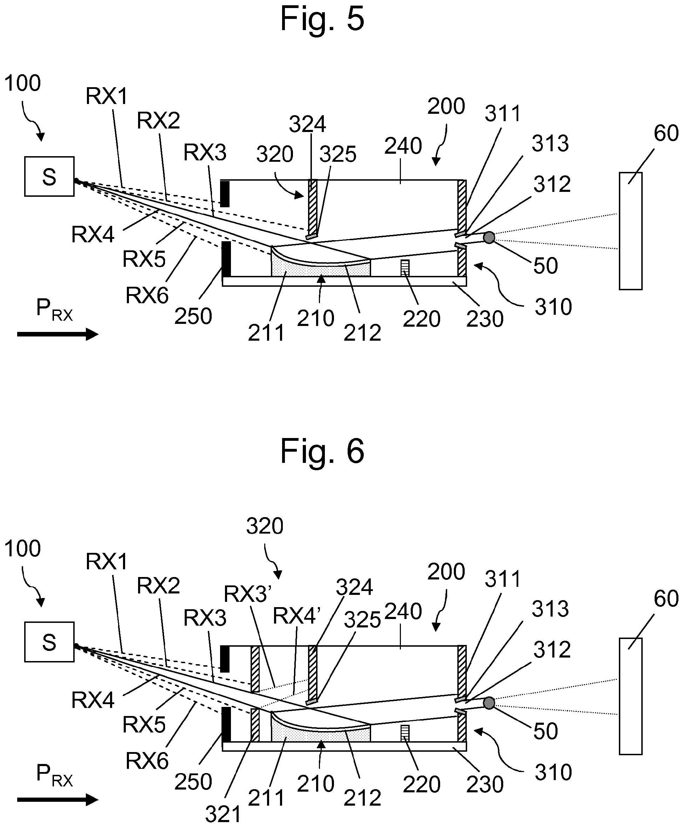

Selon un autre mode de réalisation de l'invention, tel qu'illustré à la figure 5, l'organe de coupure 320 comprend une lame d'absorption 324 formée dans un matériau absorbant les rayons-X, ladite lame d'absorption 324 étant placée dans le bloc optique 200 en regard du composant optique monochromateur 210 de manière à couper les rayons-X susceptibles d'atteindre l'organe anti-diffusant de délimitation spatiale 310 sans conditionnement par le composant optique monochromateur 210.

La lame d'absorption 324 est formée dans un matériau absorbant les rayons-X, comme par exemple un matériau à base de métal (eg. tungstène, plomb, laiton). Dans le cas d'une analyse monodimensionnel, une seule lame d'absorption 324 peut être utilisée placée de manière transversale par rapport au sens de propagation des rayons-X. Dans le cas d'une analyse bidimensionnelle, il est préférable d'utiliser plusieurs lames d'absorption 324 agencées pour couper les faisceaux de rayons-X selon plusieurs directions.

De préférence, la ou les lame(s) d'absorption comprennent une tranche 325 inclinée et revêtue d'un matériau monocristallin (tel que du silicium par exemple) prévu pour empêcher la diffusion de rayons-X sur ladite tranche.

De manière générale, le composant optique monochromateur 210 est courbé suivant une direction sagittale et suivant une direction méridionale par rapport au sens de propagation des rayons-X. Ces directions méridionales et sagittales se définissent par rapport à la direction générale de propagation du faisceau de rayons-X de la manière suivante :
- La direction méridionale correspond à la direction moyenne de propagation de ce faisceau (et plus précisément à la direction moyenne entre les directions moyennes de propagation du faisceau avant et après sa réflexion sur l'ensemble optique de conditionnement du faisceau, comprenant par exemple un composant optique monochromateur),
- La direction sagittale correspond à une direction transversale horizontale de cette direction méridionale (la verticale étant ici définie par la normale moyenne à la partie de la surface réfléchissante de l'ensemble optique et qui est effectivement utilisée pour réfléchir le faisceau de rayons-X incident). La direction sagittale correspond à la direction perpendiculaire au plan des figures 3 à 6.

Ainsi, dans le cas où le composant optique monochromateur 210 est courbé suivant une direction sagittale et suivant une direction méridionale, la lame d'absorption 324 est de préférence agencée au centre du composant optique monochromateur 210 de manière à affleurer la surface réfléchissante 212. Une telle configuration permet en effet d'absorber le maximum des rayons-X n'étant pas réfléchis par la surface réfléchissante 212 du composant optique monochromateur 210, sans pour autant couper les faisceaux utiles de ce dernier.

De préférence encore, la ou les lame(s) d'absorption 324 ont une forme complémentaire du composant optique monochromateur 210, de manière à être le plus affleurant possible de la surface réfléchissante 312, et ce quelque soit la forme du composant optique monochromateur 210.

Il est à noter que dans le cas où l'organe de coupure 320 comprend uniquement la ou les lame(s) d'absorption 324, alors il est préférable que le bloc optique 200 comprenne en amont du composant optique monochromateur 210 une fenêtre 250 de délimitation des rayons-X qui permet de couper au moins une partie des faisceaux de rayons-X émis par la source S.

En outre, de la même manière que précédemment, l'ensemble des composants du bloc optique 200 peuvent être intégrés dans un boitier 240, selon une configuration similaire à celle présentée plus haut.

Selon encore un autre mode de réalisation de l'invention tel qu'illustré à la figure 6, l'organe de coupure 320 comprend à la fois la ou les plaques d'absorption 321 présentés ci-dessus en référence à la figure 4, et la ou les lames d'absorption 324 présentés ci-dessus en référence à la figure 5.

Une telle configuration accroit la qualité de l'analyse puisque le système présente deux moyens complémentaires évitant que des faisceaux parasites atteignent l'échantillon 50 à analyser. Selon ce mode de réalisation, l'organe de coupure 320 tend à supprimer tous faisceaux de rayons-X susceptibles d'atteindre l'organe anti-diffusant de délimitation spatiale 310. Dans le cas ou certains de ces faisceaux n'auraient pas été coupés, ou que des faisceaux diffusés (RX3', RX4') auraient été émis, en particulier dans le cas où la plaque d'absorption 321 ne présente pas de bords prévus pour limiter la diffusion (notamment lorsque cette plaque 321 ne possède pas de bords inclinés revêtus de matériau monocristallin), alors la lame d'absorption 324 placée dans le bloc optique 200 vient renforcer et finaliser l'action de la plaque d'absorption 321, ce qui garantit la fonction de coupure recherchée.

Par ailleurs, dans l'un ou l'autre des différents modes de réalisation présentés ci-dessus, le bloc optique 200 peut en outre inclure un organe de coupure complémentaire (non représenté) placé entre le composant optique monochromateur 210 et l'organe anti-diffusant de délimitation spatiale 310, ledit organe de coupure complémentaire comprenant une plaque d'absorption dans laquelle est formée un orifice de définition complémentaire, l'orifice de définition complémentaire ayant des dimensions et un positionnement prévus pour couper une partie des rayons-X conditionnés par le composant optique monochromateur.

De la même manière que la plaque d'absorption 321 de l'organe de coupure principal 320, l'orifice de définition complémentaire permet de ne transmettre qu'une portion des faisceaux conditionnés par le composant optique monochromateur 210 en direction de l'échantillon 50, et donc de former un faisceau utile de rayons-X réduit par rapport au faisceau optique de rayons-X.

La configuration présentée du dispositif de délivrance de rayons-X permet de mettre en oeuvre un système d'analyse compact et efficace c'est-à-dire avec peu de diffusion parasite. Cela permet en particulier de mettre en oeuvre un système d'analyse SAXS particulièrement compact tout en conservant des niveaux de résolutions adaptés aux applications recherchées.

Selon une application privilégiée, le composant optique monochromateur a une surface réfléchissante multicouche, et est conformé pour focaliser le faisceau de rayons-X émis par la source sur le détecteur. La définition et délimitation spatiale des rayons-X pouvant être faites sur des longueurs faibles (de distance maximum entre l'optique et l'organe de délimitation de 15 cm), il est possible de mettre en oeuvre un miroir focalisant sur le détecteur avec un spot de dimension inférieur à 300 micromètres tout en conservant un espace suffisamment large entre l'échantillon et le détecteur, permettant ainsi d'obtenir des limites de détections (qₘᵢₙ) adaptées à un certain nombre d'applications, comme par exemple des analyses SAXS sur des solutions de protéines.

La cristallographie des protéines permet de déterminer la structure tridimensionnelle des protéines. La tendance actuelle est à la caractérisation de protéines de plus en plus grosses et de plus en plus complexes. De tels assemblages de protéines sont difficiles à cristalliser. Un outil de caractérisation disponible pour le chercheur biologiste et cristallographe est l'analyse RX par diffusion aux petits angles. En effet, si la structure des protéines sous forme de cristaux offre une résolution de l'ordre de l'angström, la diffusion aux petits angles offre une résolution plutôt de l'ordre de 5 à 10 angstrôms. L'information obtenue concerne donc l'enveloppe (la forme) de la protéine. Cette information est d'une haute valeur surtout si le système étudié ne peut pas cristalliser. Dans le cas où le système peut cristalliser, la validation du modèle cristallographique par la technique SAXS a également une haute valeur en permettant de valider ou d'invalider le modèle structural, en plaquant l'enveloppe mesurée par SAXS sur la mesure cristallographique.

Afin de déterminer le rayon de giration de la solution de protéine et son poids moléculaire une limite de résolution de qₘᵢₙ égale à 1^{e}-2 Å⁻¹ couvrira la grande majorité des systèmes étudiés ainsi qu'une résolution Δq (Å⁻¹) de 5^{e}-3 Å⁻¹.

Des configurations possibles du système d'analyse pour de telles analyses SAXS sont les suivantes :

| | **Exemple 1** | **Exemple 2** |
|---|---|---|
| Type Miroir | Composant Optique à revêtement multicouche de longueur 80 mm (pour une source émettant la radiation CuKα et de taille 50 microns) *Ex : miroir FOX 3D 10_30 de XENOCS* | Composant Optique à revêtement multicouche de longueur 100 mm (pour une source émettant la radiation CuKα et de taille 50 microns) *Ex : Miroir FOX 3D 14_39 de XENOCS* |
| Distance source - centre du miroir | 10 cm | 14 cm |
| Distance centre miroir - point de focalisation | 30 cm | 39 cm |
| Distance sortie miroir - fente anti-diffusante | 13 cm | 13 cm |
| Distance sortie miroir - échantillon | 15 cm | 15 cm |
| Distance échantillon - détecteur | 15 cm | 24 cm |
| Qmin (théorique) avec un beamstop de 500 microns | 0.0095 Å⁻¹ | 0.0085 Å⁻¹ |
| Δq (Å⁻¹) (théorique) | 0.003 Å⁻¹ | 0.005 Å⁻¹ |

Les configurations compactes décrites ci-dessus sont donc réalisables à l'aide du dispositif de délivrance de faisceau proposé qui est particulièrement compact. Les configurations optiques décrites ci-dessus sont également adaptées à la réalisation d'un système de cristallographie des protéines car la taille de spot produite à l'aide d'une source de 50 micromètres est de l'ordre de 200 à 250 micromètres sur le point focal.

Il est donc possible à l'aide du dispositif de délivrance de faisceau de rayons-X proposé d'avoir un système d'analyse adapté à plusieurs analyses à l'aide d'un système unique constitué d'une source et d'une optique unique.

Comme il ressort de la description qui précède, le système d'analyse proposé est particulièrement avantageux pour les analyses SAXS d'étude de la diffusion de rayons-X aux petits angles, mais il présente des avantages lui permettant d'être utilisé dans tout autre type d'analyses par rayons-X, telles que par exemple les études de diffraction aux rayons-X plus classiques (appelées analyses XRD, correspondant à l'acronyme anglais « X-Ray Diffraction »), les études de la diffusion de rayons-X aux grands angles (appelées analyses WAXS, correspondant à l'acronyme anglais « Wide Angle X-ray Scattering »), ou les études par fluorescence aux rayons-X (appelées analyses XRF, correspondant à l'acronyme anglais « X-Ray Fluorescence »).

Le lecteur aura compris que de nombreuses modifications peuvent être apportées sans sortir matériellement des nouveaux enseignements et des avantages décrits ici. Par conséquent, toutes les modifications de ce type sont destinées à être incorporées à l'intérieur de la portée du dispositif de délivrance d'un faisceau de rayons-X selon l'invention.

## Revendications

1. Dispositif de délivrance d'un faisceau de rayons-X prévu pour l'analyse d'un échantillon (50) par diffusion de rayons-X aux petits angles, l'échantillon (50) étant placé en sortie dudit dispositif de délivrance, ledit dispositif comprenant:
- un bloc source (100) comprenant des moyens d'émission de rayons-X ; ledit dispositif étant **caractérisé en ce qu'**il comprend:
- un bloc optique (200) placé en aval du bloc source (100) par rapport au sens propagation des rayons-X (P_{RX}), ledit bloc optique (200) comprenant un composant optique monochromateur (210) ayant une surface réfléchissante (212) prévue pour conditionner des rayons-X émis par le bloc source (100) selon un effet optique monodimensionnel ou bidimensionnel ; et
- des moyens de définition (300) des rayons-X comprenant :
o un organe (310) anti-diffusant de délimitation spatiale des rayons-X conditionnés par le composant optique monochromateur (210), ledit organe (310) anti-diffusant de délimitation spatiale étant agencé en aval du composant optique monochromateur (210) par rapport au sens de propagation des rayons-X (P_{RX}), ledit organe (310) anti-diffusant de délimitation spatiale comprenant une ou plusieurs plaques (311) ayant des portions (313) agencées pour former un orifice de délimitation (312), lesdites portions (313) étant revêtues d'un matériau monocristallin limitant la diffusion de rayons-X ;
o un organe (320) de coupure des rayons-X émis par le bloc source (100), ledit organe de coupure (320) comprenant des moyens d'absorption de rayons-X agencés dans le dispositif de délivrance pour couper les faisceaux directs de rayons-X émis par le bloc source (100) susceptibles d'atteindre l'organe (310) anti-diffusant de délimitation spatiale sans conditionnement par le composant optique monochromateur (210), lesdits moyens d'absorption de rayons-X de l'organe (320) de coupure étant agencés pour empêcher les faisceaux directs de rayons-X d'aller au-delà du composant optique monochromateur (210) dans le sens de propagation des rayons-X (P_{RX}).

2. Dispositif selon la revendication 1, dans lequel l'organe (320) de coupure comprend une plaque d'absorption (321) formée dans un matériau absorbant les rayons-X et incluant un orifice de définition (322), ladite plaque d'absorption (321) étant agencée en amont du composant optique monochromateur (210) par rapport au sens de propagation des rayons-X (P_{RX}), et ledit orifice de définition (322) ayant des dimensions et un positionnement prévus pour couper les faisceaux directs de rayons-X émis par le bloc source (100) susceptibles d'atteindre l'organe (310) anti-diffusant de délimitation spatiale sans conditionnement par le composant optique monochromateur (210).

3. Dispositif selon la revendication 2, dans lequel l'orifice de définition (322) de l'organe (320) de coupure a des dimensions réduites et un positionnement prévus pour couper une partie des faisceaux optiques de rayons-X émis par le bloc source venant directement impacter la surface réfléchissante (212) du composant optique monochromateur (210).

4. Dispositif selon l'une des revendications 2 ou 3, dans lequel l'orifice de définition (322) de l'organe de coupure (320) comprend des bords inclinés (323) et revêtus d'un matériau monocristallin prévu pour empêcher la diffusion de rayons-X sur lesdits bords (323).

5. Dispositif selon l'une des revendications 2 à 4, dans lequel l'orifice de définition (322) et l'orifice de délimitation (312) ont la forme d'une fente ou d'un trou, le trou étant de préférence rectangulaire, carré ou circulaire.

6. Dispositif selon l'une des revendications 2 à 5, dans lequel la plaque d'absorption (321) de l'organe (320) de coupure, le composant optique monochromateur (210) et l'organe (310) anti-diffusant de délimitation spatiale sont fixés sur un même support monolithique (230).

7. Dispositif selon l'une des revendications 2 à 6, dans lequel la plaque d'absorption (321) de l'organe (320) de coupure, le composant optique monochromateur (210) et l'organe (310) anti-diffusant de délimitation spatiale sont agencés à l'intérieur d'un boitier (240) adapté pour être mis sous vide, ledit boitier (240) comprenant des parois d'entrée et de sortie formées dans un matériau transparent aux rayons-X.

8. Dispositif selon l'une des revendications 1 à 7, dans lequel l'organe (320) de coupure comprend une lame d'absorption (324) formée dans un matériau absorbant les rayons-X, ladite lame d'absorption (324) étant placée dans le bloc optique (100) en regard du composant optique monochromateur (210) de manière à couper les rayons-X susceptibles d'atteindre l'organe (310) anti-diffusant de délimitation spatiale sans conditionnement par le composant optique monochromateur (210).

9. Dispositif selon la revendication 8, dans lequel la lame d'absorption (324) comprend une tranche (325) inclinée et revêtue d'un matériau monocristallin prévu pour empêcher la diffusion de rayons-X sur ladite tranche (325).

10. Dispositif selon l'une des revendications 8 ou 9, dans lequel le composant optique monochromateur (210) est courbé suivant une direction sagittale et suivant une direction méridionale par rapport au sens de propagation des rayons-X (P_{RX}), la lame d'absorption (324) étant agencée au centre du composant optique monochromateur (210) de manière à affleurer la surface réfléchissante (212).

11. Dispositif selon l'une des revendications 8 à 10, dans lequel la lame d'absorption (324) a une forme complémentaire du composant optique monochromateur (210).

12. Dispositif selon l'une des revendications 1 à 11, dans lequel l'organe (310) anti-diffusant de délimitation spatiale comprend une plaque (311) dans laquelle est formée l'orifice de délimitation (312), ledit orifice de délimitation (312) comprenant des bords (313) inclinés revêtus du matériau monocristallin prévu pour empêcher la diffusion de rayons-X sur lesdits bords (313), ou l'organe (310) anti-diffusant de délimitation spatiale comprend plusieurs plaques, chaque plaque ayant une tranche inclinée revêtue du matériau monocristallin prévu pour empêcher la diffusion de rayons-X sur ladite tranche, lesdites plaques étant agencées les unes par rapport aux autres de sorte que lesdites tranches forment l'orifice de délimitation dans le sens de propagation des rayons-X.

13. Dispositif selon l'une des revendications 1 à 12, dans lequel la distance entre la sortie du composant optique monochromateur (210) et l'entrée de l'organe (310) anti-diffusant de délimitation spatiale est inférieure à 15 cm.

14. Dispositif selon l'une des revendications 1 à 13, dans lequel le dispositif de délivrance comprend en outre un organe de coupure complémentaire placé entre le composant optique monochromateur (210) et l'organe anti-diffusant (310) de délimitation spatiale, ledit organe de coupure complémentaire comprenant une plaque d'absorption des rayons-X dans laquelle est formée un orifice de définition complémentaire, l'orifice de définition complémentaire ayant des dimensions et un positionnement prévus pour couper une partie des rayons-X conditionnés par le composant optique monochromateur afin de former le faisceau utile de rayons-X pour analyser l'échantillon (50).

15. Dispositif selon l'une des revendications 1 à 14, dans lequel la surface réfléchissante (212) du composant optique monochromateur (210) est formée d'un revêtement multicouche, ledit composant optique monochromateur (210) étant en outre conformé pour une collimation des rayons-X impactant ledit composant optique monochromateur (210) en direction de l'échantillon (50).

16. Système d'analyse d'un échantillon (50) par rayons-X comprenant un dispositif de délivrance de rayons-X selon l'une des revendications 1 à 15 et un détecteur (60) à rayons-X placé en aval de l'échantillon (50) par rapport au sens de propagation des rayons-X (P_{RX}), et dans lequel la surface réfléchissante (212) du composant optique monochromateur (210) est formée d'un revêtement multicouche, ledit composant optique monochromateur (210) étant en outre conformé pour une focalisation sur le détecteur (60) des rayons-X impactant ledit composant optique monochromateur (210).

## Patentansprüche

1. Vorrichtung zur Bereitstellung eines Röntgenstrahlenstrahls für die Analyse einer Probe (50) durch Kleinwinkelröntgenstreuung, wobei die Probe (50) am Ausgang der Bereitstellungsvorrichtung angeordnet ist, wobei die Vorrichtung umfasst:
- einen Quellenblock (100), umfassend Röntgenstrahlen-Sendemittel;
wobei die Vorrichtung **dadurch gekennzeichnet ist, dass** sie umfasst:
- einen optischen Block (200), platziert nach dem Quellenblock (100) in Bezug zur Ausbreitungsrichtung der Röntgenstrahlen (P_{RX}), wobei der optische Block (200) eine optische Monochromatorkomponente (210) mit einer reflektierenden Fläche (212) umfasst, die vorgesehen ist, um von dem Quellenblock (100) gesendete Röntgenstrahlen gemäß einem eindimensionalen oder zweidimensionalen optischen Effekt zu konditionieren; und
- Definitionsmittel (300) der Röntgenstrahlen, umfassend:
o ein räumlich begrenzendes Anti-Diffusionsorgan (310) der von der optischen Monochromatorkomponente (210) konditionierten Röntgenstrahlen, wobei das räumlich begrenzende Anti-Diffusionsorgan (310) nach der optischen Monochromatorkomponente (210) in Bezug zur Ausbreitungsrichtung der Röntgenstrahlen (P_{RX})ausgebildet ist, wobei das räumlich begrenzende Anti-Diffusionsorgan (310) eine oder mehrere Platten (311) umfasst, die Abschnitte (313) haben, die ausgebildet sind, um eine Begrenzungsöffnung (312) zu bilden, wobei die Abschnitte (313) mit einem monokristallinem Material beschichtet sind, das die Ausbreitung von Röntgenstrahlen begrenzt;
∘ ein Unterbrechungsorgan (320) der von dem Quellenblock (100) gesendeten Röntgenstrahlen, wobei das Unterbrechungsorgan (320) Röntgenstrahlen-Absorptionsmittel umfasst, die in der Bereitstellungsvorrichtung ausgebildet sind, um die vom Quellenblock (100) gesendeten direkten Röntgenstrahlenstrahlen zu unterbrechen, die das räumlich begrenzende Anti-Diffusionsorgan (310) ohne Konditionierung durch die optische Monochromatorkomponente (210) erreichen könnten, wobei die Röntgenstrahlen-Absorptionsmittel des Unterbrechungsorgans (320) ausgebildet sind, um zu verhindern, dass die direkten Röntgenstrahlenstrahlen über die optische Monochromatorkomponente (210) in Ausbreitungsrichtung der Röntgenstrahlen (P_{RX})hinausgehen.

2. Vorrichtung nach Anspruch 1, wobei das Unterbrechungsorgan (320) eine Absorptionsplatte (321) umfasst, gebildet aus einem Material, das Röntgenstrahlen absorbiert, und einschließend eine Definitionsöffnung (322), wobei die Absorptionsplatte (321) vor der optischen Monochromatorkomponente (210) in Bezug zur Ausbreitungsrichtung der Röntgenstrahlen (P_{RX})ausgebildet ist, und die Definitionsöffnung (322) Abmessungen und eine Positionierung hat, die vorgesehen sind, um die von dem Quellenblock (100) gesendeten direkten Röntgenstrahlenstrahlen, die das räumlich begrenzende Anti-Diffusionsorgan (310) ohne Konditionierung durch die optische Monochromatorkomponente (210) erreichen könnten, zu unterbrechen.

3. Vorrichtung nach Anspruch 2, wobei die Definitionsöffnung (322) des Unterbrechungsorgans (320) reduzierte Abmessungen und eine Positionierung hat, die vorgesehen sind, um einen Teil der von dem Quellenblock gesendeten optischen Röntgenstrahlenstrahlen, die direkt auf die reflektierende Fläche (212) der optischen Monochromatorkomponente (210) auftreffen, zu unterbrechen.

4. Vorrichtung nach einem der Ansprüche 2 oder 3, wobei die Definitionsöffnung (322) des Unterbrechungsorgans (320) Ränder (323) umfasst, die geneigt und mit einem monokristallinen Material beschichtet sind, das vorgesehen ist, um die Ausbreitung von Röntgenstrahlen über die Ränder (323) zu verhindern.

5. Vorrichtung nach einem der Ansprüche 2 bis 4, wobei die Definitionsöffnung (322) und die Begrenzungsöffnung (312) die Form eines Schlitzes oder eines Lochs haben, wobei das Loch vorzugsweise rechteckig, quadratisch oder kreisförmig ist.

6. Vorrichtung nach einem der Ansprüche 2 bis 5, wobei die Absorptionsplatte (321) des Unterbrechungsorgans (320), die optische Monochromatorkomponente (210) und das räumlich begrenzende Anti-Diffusionsorgan (310) auf einem selben monolithischen Halter (230) befestigt sind.

7. Vorrichtung nach einem der Ansprüche 2 bis 6, wobei die Absorptionsplatte (321) des Unterbrechungsorgans (320), die optische Monochromatorkomponente (210) und das räumlich begrenzende Anti-Diffusionsorgan (310) im Inneren eines Gehäuses (240) ausgebildet sind, das geeignet ist, um in Vakuum versetzt zu sein, wobei das Gehäuse (240) Eingangs- und Ausgangswände umfasst, die aus einem für Röntgenstrahlen transparenten Material gebildet sind.

8. Vorrichtung nach einem der Ansprüche 1 bis 7, wobei das Unterbrechungsorgan (320) eine Absorptionsklinge (324) umfasst, die aus einem die Röntgenstrahlen absorbierenden Material gebildet ist, wobei die Absorptionsklinge (324) in dem optischen Block (100) gegenüber der optischen Monochromatorkomponente (210) derart platziert ist, dass die Röntgenstrahlen, die das räumlich begrenzende Anti-Diffusionsorgan (310) ohne Konditionierung durch die optische Monochromatorkomponente (210) erreichen könnten, unterbrochen werden.

9. Vorrichtung nach Anspruch 8, wobei die Absorptionsklinge (324) eine Kante (325) umfasst, die geneigt und mit einem monokristallinen Material beschichtet ist, das vorgesehen ist, um die Ausbreitung von Röntgenstrahlen über die Kante (325) zu verhindern.

10. Vorrichtung nach einem der Ansprüche 8 oder 9, wobei die optische Monochromatorkomponente (210) gemäß einer sagittalen Richtung und gemäß einer meridionalen Richtung in Bezug zur Ausbreitungsrichtung der Röntgenstrahlen (P_{RX})gekrümmt ist, wobei die Absorptionsklinge (324) im Zentrum der optischen Monochromatorkomponente (210) derart ausgebildet ist, dass sie mit der reflektierenden Fläche (212) fluchtet.

11. Vorrichtung nach einem der Ansprüche 8 bis 10, wobei die Absorptionsklinge (324) eine komplementäre Form der optischen Monochromatorkomponente (210) hat.

12. Vorrichtung nach einem der Ansprüche 1 bis 11, wobei das räumlich begrenzende Anti-Diffusionsorgan (310) eine Platte (311) umfasst, in welcher die Begrenzungsöffnung (312) gebildet ist, wobei die Begrenzungsöffnung (312) Ränder (313) umfasst, die geneigt und mit dem monokristallinen Material beschichtet sind, das vorgesehen ist, um die Ausbreitung von Röntgenstrahlen über die Ränder (313) zu verhindern, oder das räumlich begrenzende Anti-Diffusionsorgan (310) mehrere Platten umfasst, wobei jede Platte eine geneigte Kante umfasst, die mit dem monokristallinen Material beschichtet ist, das vorgesehen ist, um die Ausbreitung von Röntgenstrahlen über die Kante zu verhindern, wobei die Platten zueinander derart ausgebildet sind, dass die Kanten die Begrenzungsöffnung in Ausbreitungsrichtung der Röntgenstrahlen bilden.

13. Vorrichtung nach einem der Ansprüche 1 bis 12, wobei der Abstand zwischen dem Ausgang der optischen Monochromatorkomponente (210) und dem Eingang des räumlich begrenzenden Anti-Diffusionsorgans (310) kleiner als 15 cm ist.

14. Vorrichtung nach einem der Ansprüche 1 bis 13, wobei die Bereitstellungsvorrichtung ferner ein zusätzliches Unterbrechungsorgan umfasst, das zwischen der optischen Monochromatorkomponente (210) und dem räumlich begrenzenden Anti-Diffusionsorgan (310) platziert ist, wobei das zusätzliche Unterbrechungsorgan eine Absorptionsplatte der Röntgenstrahlen umfasst, in welcher eine komplementäre Definitionsöffnung gebildet ist, wobei die komplementäre Definitionsöffnung Abmessungen und eine Positionierung hat, die vorgesehen sind, um einen Teil der von der optischen Monochromatorkomponente konditionierten Röntgenstrahlen zu unterbrechen, um den Röntgenstrahlenstrahl zu bilden, der zum Analysieren der Probe (50) nützlich ist.

15. Vorrichtung nach einem der Ansprüche 1 bis 14, wobei die reflektierenden Fläche (212) der optischen Monochromatorkomponente (210) von einer Mehrschichtbeschichtung gebildet ist, wobei die optische Monochromatorkomponente (210) ferner für eine Kollimation der Röntgenstrahlen ausgebildet ist, die auf die optische Monochromatorkomponente (210) in Richtung der Probe (50) auftreffen.

16. Analysesystem einer Probe (50) durch Röntgenstrahlen, umfassend eine Röntgenstrahlen-Bereitstellungsvorrichtung nach einem der Ansprüche 1 bis 15 und einen Röntgenstrahlen-Detektor (60), der nach der Probe (50) in Bezug zur Ausbreitungsrichtung der Röntgenstrahlen (P_{RX})platziert ist, und wobei die reflektierende Fläche (212) der optischen Monochromatorkomponente (210) von einer mehrschichtigen Beschichtung gebildet ist, wobei die optische Monochromatorkomponente (210) ferner für eine Fokussierung auf den Detektor (60) der Röntgenstrahlen ausgebildet ist, die auf die optische Monochromatorkomponente (210) auftreffen.

## Claims

1. A device for delivery of a beam of X-rays provided for analysing a sample (50) by small-angle X-ray scattering, the sample (50) being placed at the output of said delivery device, said device comprising:
- a source block (100) comprising X-rays emission means;
said device being **characterised in that** it comprises:
- an optical block (200) placed downstream of the source block (100) relative to the direction of propagation of the X-rays (P_{RX}), said optical block (200) comprising an optical monochromator component (210) having a reflecting surface (212) provided for conditioning X-rays emitted by the source block (100) according to a unidimensional or bidimensional optical effect; and
- definition means (300) of X-rays comprising:
o an anti-diffusing member (310) for spatially delimiting X-rays conditioned by the optical monochromator component (210), said spatial delimitation anti-diffusing member (310) being arranged downstream of the optical monochromator component (210) relative to the direction of propagation of the X-rays (P_{RX}), said spatial delimitation anti-diffusing member (310) comprising one or more plates (311) having portions (313) arranged to form a delimiting orifice (312), said portions (313) being coated with a monocrystalline material limiting the scattering of X-rays;
o a cut-off member (320) of X-rays emitted by the source block (100), said cut-off member (320) comprising X-ray absorption means arranged in the delivery device to cut off the direct X-ray beams emitted by the source block (100) likely to reach the spatial delimitation anti-diffusing member (310) without conditioning by the optical monochromator component (210), said X-ray absorption means of the cut-off member (320) being arranged to prevent the direct X-ray beams from going beyond the optical monochromator component (210) in the direction of propagation of the X-rays (P_{RX}).

2. The device as claimed in Claim 1, wherein the cut-off member (320) comprises an absorption plate (321) formed from a material absorbing X-rays and including a definition orifice (322), said absorption plate (321) being arranged upstream of the optical monochromator component (210) relative to the direction of propagation of the X-rays (P_{RX}), and said definition orifice (322) having dimensions and a positioning provided to cut off the direct X-ray beams emitted by the source block (100) likely to reach the spatial delimitation anti-diffusing member (310) without conditioning by the optical monochromator component (210).

3. The device as claimed in Claim 2, wherein the definition orifice (322) of the cut-off member (320) has reduced dimensions and a positioning provided to cut off part of the optical X-ray beams emitted by the source block directly impacting the reflecting surface (212) of the optical monochromator component (210).

4. The device as claimed in any one of Claims 2 or 3, wherein the definition orifice (322) of the cut-off member (320) comprises inclined edges (323) coated with a monocrystalline material provided to prevent the scattering of X-rays on said edges (323).

5. The device as claimed in any one of Claims 2 to 4, wherein the definition orifice (322) and the delimiting orifice (312) have the form of a slit or a hole, the hole being preferably rectangular, square or circular.

6. The device as claimed in any one of Claims 2 to 5, wherein the absorption plate (321) of the cut-off member (320), the optical monochromator component (210) and the spatial delimitation anti-diffusing member (310) are fixed on the same monolithic support (230).

7. The device as claimed in any one of Claims 2 to 6, wherein the absorption plate (321) of the cut-off member (320), the optical monochromator component (210) and the spatial delimitation anti-diffusing member (310) are arranged inside a casing (240) adapted to be under vacuum, said casing (240) comprising inlet and outlet walls formed from a material transparent to X-rays.

8. The device as claimed in any one of Claims 1 to 7, wherein the cut-off member (320) comprises an absorption blade (324) formed from a material absorbing X-rays, said absorption blade (324) being placed in the optical block (100) opposite the optical monochromator component (210) so as to cut off the X-rays likely to reach the spatial delimitation anti-diffusing member (310) without conditioning by the optical monochromator component (210).

9. The device as claimed in Claim 8, wherein the absorption blade (324) comprises an inclined edge (325) coated in a monocrystalline material provided to prevent the scattering of X-rays on said edge (325).

10. The device as claimed in any one of Claims 8 or 9, wherein the optical monochromator component (210) is curved in a sagittal direction and in a meridional direction relative to the direction of propagation of the X-rays (P_{RX}), the absorption blade (324) being arranged at the centre of the optical monochromator component (210) so as to brush the reflecting surface (212).

11. The device as claimed in any one of Claims 8 to 10, wherein the absorption blade (324) has a form complementary to the optical monochromator component (210).

12. The device as claimed in any one of Claims 1 to 11, wherein the spatial delimitation anti-diffusing member (310) comprises a plate (311) in which is formed the delimiting orifice (312), said delimiting orifice (312) comprising inclined edges (313) coated in the monocrystalline material provided to prevent the scattering of X-rays on said edges (313) or the spatial delimitation anti-diffusing member (310) comprises several plates, each plate having an inclined edge coated with the monocrystalline material provided to prevent the scattering of X-rays on said edge, said plates being arranged relative to each other such that said edges form the delimiting orifice in the direction of propagation of the X-rays.

13. The device as claimed in any one of Claims 1 to 12, wherein the distance between the outlet of the optical monochromator component (210) and the inlet of the spatial delimitation anti-diffusing member (310) is lower than 15 cm.

14. The device as claimed in any one of Claims 1 to 13, wherein the delivery device further comprises a complementary cut-off member placed between the optical monochromator component (210) and the spatial delimitation anti-diffusing member (310), said complementary cut-off member comprising an absorption plate of X-rays in which a complementary definition orifice is formed, the complementary definition orifice having dimensions and a positioning provided to cut off some of the X-rays conditioned by the optical monochromator component to then form the useful beam of X-rays for analysis of the sample (50).

15. The device as claimed in any one of Claims 1 to 14, wherein the reflecting surface (212) of the optical monochromator component (210) is formed by a multilayer coating, said optical monochromator component (210) being also suitable for collimation of X-rays impacting said optical monochromator component (210) in the direction of the sample (50).

16. An analysis system of a sample (50) by X-rays comprising an X-ray delivery device as claimed in any one of Claims 1 to 15 and an X-ray detector (60) placed downstream of the sample (50) relative to the direction of propagation of the X-rays (P_{RX}), and wherein the reflecting surface (212) of the optical monochromator component (210) is formed by a multilayer coating, said optical monochromator component (210) being also suitable for focussing on the detector (60) X-rays impacting said optical monochromator component (210).
